# EUROPÄISCHE PATENTSCHRIFT

(11) **EP 2 296 155 B1**
(45) Veröffentlichungstag und Bekanntmachung des Hinweises auf die Patenterteilung: **05.04.2017**
(21) Anmeldenummer: 10009440.8
(22) Anmeldetag: 10.09.2010
(51) Int. Cl.: H01F 7/16, H01F 7/08, F16K 31/06

(54) **Elektromagnet mit einem Anker**
Electromagnet having an armature
Électroaimant comprenant une armature

(30) Priorität: 14.09.2009 DE 102009041188
(43) Veröffentlichungstag der Anmeldung: 16.03.2011
(73) Patentinhaber: Firma SVM Schultz Verwaltungs-GmbH & Co. KG, 87700 Memmingen (DE)
(72) Erfinder: Weiss, Johann, 88239 Wangen (DE); Wiedemann, Peter, 87757 Derndorf (DE)
(74) Vertreter: Pfister, Stefan Helmut Ulrich

(56) Entgegenhaltungen:
- JP-A- S6 177 312
- JP-A- H07 208 635
- JP-U- S58 169 285
- US-A- 5 553 829

## Beschreibung

Die Erfindung betrifft einen Elektromagnet, zumindest umfassend einen in einem Ankerraum gelagerten Anker, wobei der Ankerraum von einer Spule umgeben ist, die eine Vielzahl von mit elektrischen Strom beaufschlagbaren Wicklungen trägt und das bei Strombeaufschlagung entstehende Magnetfeld den Anker gegen einen Polkern bewegt.

Gattungsgemäße Elektromagneten sind in der Technik in weiten Bereich bekannt. Die Bewegung des Ankers wird für das Ansteuern der verschiedensten Elemente eingesetzt, zum Beispiel finden Elektromagneten für die Ansteuerung von Ventilelementen Verwendung. Von Elektromagneten wird erwartet, dass diese eine hohe Betriebsdauer, das heißt eine Vielzahl von Schaltvorgängen zuverlässig mit möglichst konstanten Eigenschaften überdauern und entsprechend zuverlässig sind.

Der Anker ist zum Beispiel durch eine entsprechende Rückstellfeder im unbestromten Zustand des Elektromagneten in einer Endlage gehalten. Wird nun die Stromwicklung mit elektrischen Strom beaufschlagt, so bildet sich das Magnetfeld im Spuleninneren, insbesondere im Ankerraum aus und wirkt auf den Anker, der dann relativ stark beschleunigt wird und auf den Polkern prallt. Es resultiert ein gewisser Verschleiß, der bei einer Vielzahl von Schaltungen (zum Beispiel 10 Mio., 15 Mio. oder 20 Mio. Schaltungen) zu einem merklich veränderten Schaltverhalten des Elektromagneten führt. Es wurde beobachtet, dass durch die hohe Aufschlagenergie eine Aufberstung am Anker erfolgt und dies die Laufeigenschaften des Ankers verschlechtert, was zu entsprechenden Auffälligkeiten beim Abfallverhalten des Ankers führte.

Das Dokument JPH 07 208 635 A zeigt einen Elektromagneten für ein elektromagnetisch betätigtes Luftsteuerventil, bei welchem die Erschütterung eines beweglichen Eisenkerns verringert wird.

Das Dokument JPS 58169285 U zeigt einen Elektromagneten mit einem beweglichen Anker, welcher eine Aufschlagdämpfung aufweist.

Ausgehend von diesem Stand der Technik ist es Aufgabe der Erfindung die Zuverlässigkeit eines Elektromagneten zu erhöhen.

Zur Lösung dieser Aufgabe geht die Erfindung aus von einem Elektromagneten, wie eingangs beschrieben, und schlägt vor, dass in dem Anker ein Prallstößel beweglich gelagert ist und im unbestromten Zustand der Abstand zwischen der Stößelstirnfläche und dem Kern geringer ist als der Abstand zwischen der Ankerstirnfläche und dem Polkern.

Um dies zu erreichen schlägt die Erfindung vor, dass in dem Anker ein Prallstößel beweglich gelagert ist und dessen dem Polkern zugewandte Stößelstirnfläche im unbestromten Zustand gegenüber der Ankerstirnfläche vorsteht. Eine andere Möglichkeit besteht darin, dass der Polkern in dem Bereich, in welchem der Prallstößel auftrifft, eine Erhöhung aufweist und somit die Stößelstirnfläche gegenüber der Ankerstirnfläche zurückstehen kann. Dies bewirkt, dass trotzdem zuerst die Stößelstirnfläche auf dem Kern (und zwar im Bereich der Erhöhung, natürlich unter Beachtung einer entsprechenden Dimensionierung) aufprallt. Die Erhöhung ist zum Beispiel als Konus ausbildbar und taucht dann ein wenig in den Anker ein.

Zum Beispiel wird in dem Anker, der einteilig oder auch mehrteilig ausgebildet ist, ein beweglich gelagerter Prallstößel angeordnet, der bei der Anzugbewegung des Ankers zunächst als erstes auf der Oberfläche des Polkernes aufprallt und so bereits einen Teil der kinetischen Energie aufnimmt. Dabei steht der Prallstößel etwas über den Anker derart vor, dass die Stößelstirnfläche im unbestromten Zustand in den sich zwischen dem Anker und dem Polkern bildenden Luftspalt etwas hineinsteht. Dadurch definiert sich die Ankerstirnseite als die Seite des Ankers, die bei der Anzug- oder Hubbewegung des Ankers (beim Bestromen der auf der Spule gelagerten Wicklung) in Bewegungsrichtung des Ankers vorne ist.

Bei der vorgeschlagenen Anordnung ist im unbestromten Zustand der Abstand zwischen der Stößelstirnfläche zum Kern geringer als der Luftspalt, der definiert ist durch den Abstand zwischen dem Anker beziehungsweise dessen Ankerstirnfläche und dem Polkern.

Der Vorschlag erlaubt es, dass die Ausgestaltung des Luftspaltes im Wesentlichen unverändert bleibt. Der Luftspalt bildet sich aus zwischen der metallischen Ankerstirnfläche beziehungsweise der oftmals auch metallischen Stößelstirnfläche einerseits und dem Polkern beziehungsweise der Polkernfläche andererseites. Da keine sonstigen Elemente im Luftspalt vorgesehen sind, beeinflusst die spezielle Ankerausgestaltung die magnetischen Eigenschaften nicht weiter.

In einer Variante ist vorgesehen, dass der Anker ein Element trägt, welches die kinetische Energie des Ankers derart kompensiert, dass eine Ausberstung der Ankerstirnfläche aufgrund des Aufprallens des Ankers auf der Polkernfläche möglichst vermieden wird.

Erreicht wird dies zum Beispiel dadurch, dass ein die Energie des Ankers vernichtendes Element vorgesehen ist, welches geeignet ist, den Prallstößel in der abgefallenen Situation (wenn der Strom durch die Spule wieder abgeschaltet ist) wieder zurück zu bewegen, zum Beispiel wird dann der Prallstößel wieder so positioniert, dass die Stößelstirnfläche wieder gegenüber der Ankerstirnfläche hervorsteht. Hierzu sind zum Beispiel entsprechende Stoßdämpfer denkbar.

In einer anderen Variante ist vorgesehen, dass in dem Anker ein elastisches Element, insbesondere eine Stößelfeder für den Prallstößel vorgesehen ist und das elastische Element komprimiert wird, wenn sich bei Strombeaufschlagung der Anker gegen den Polkern bewegt und die Stößelstirnfläche auf dem Polkern anliegt beziehungsweise auf diesen aufprallt.

Die Verwendung der Stößelfeder führt zu einem besseren Abfallverhalten, da eine zusätzliche Abdrückkraft des Prallstößels durch die komprimierte Stößelfeder zur Verfügung steht.

Die Anordnung ist dabei so gewählt, dass der Prallstößel zumindest einen Teil der kinetischen Energie, die der beschleunigte Anker der Hubbewegung aufweist, aufnimmt und kompensiert. Die noch verbleibende Restenergie ist ausreichend gering, um keine Beschädigung des Ankers zu bewirken.

Bevorzugterweise besitzt eine Variante des Elektromagneten in dem Anker eine axiale Durchdringungsöffnung zur Aufnahme des Prallstößels. Durch eine solche Ausgestaltung ist eine platzsparende Anordnung des Prallstößels möglich. Eine solche Ausgestaltung geht aber auch mit weiteren Vorteilen einher. Die Anordnung einer Durchdringungsöffnung in dem Anker entfernt von dem Anker Material und damit auch Masse. Der eingesetzte Prallstößel füllt unter Umständen das gesamte Volumen der Durchdringungsöffnung nicht aus, er besitzt eine gewisse Beweglichkeit in der Durchdringungsöffnung. Dies führt zu einer entsprechenden Reduzierung der Gesamtmasse des Ankers zusammen mit dem Prallstößel und den sonstigen Elementen. Bei gleichbleibender Ausgestaltung der Spule wird damit das Schaltverhalten verbessert, nämlich beschleunigt, oder aber es wird die Möglichkeit geboten, im Hinblick auf die Ausgestaltung der Spule, Wicklungen einzusparen und somit entsprechendes Spulmaterial zu sparen, um die gleichen mechanischen Eigenschaften zu realisieren. Eine solche Ausgestaltung hat daher überraschenderweise ein zusätzliches Einsparpotential oder aber eine Leistungssteigerung des erfindungsgemäß ausgestalteten Elektromagneten.

Die vorgeschlagene Durchdringungsöffnung ist dabei zum Beispiel als Stufenbohrung ausgebildet und eröffnet somit die Möglichkeit, zum Beispiel auch ein Dichtelement aufzunehmen. Der Begriff "axial" ist dabei in Richtung der Hubbewegung definiert, üblicherweise ist der Anker als zylindrischer, insbesondere rotationssymmetrischer Körper ausgebildet, der eine Längsachse aufweist, die Durchdringungsöffnung ist parallel zu dieser Längsachse und so axial angeordnet.

Dabei ist die Erfindung auf die Anordnung einer axialen Durchdringungsöffnung nicht beschränkt. Erfindungsgemäß ist in dem Anker eine axial angeordnete Sacklochbohrung vorgesehen. Es kann auch ei-ne Ausnehmung in der Ankerstirnfläche zur Aufnahme des Prallstößels vorgesehen sein. Es bildet sich so am Boden der Sacklochbohrung eine entsprechende Abstützmöglichkeit für das elastische Element, zum Beispiel die Stößelfeder aus. Der Anker selber wirkt dann zum Beispiel durch ein anderes Element auf ein Steuerglied, wie zum Beispiel ein Dichtelement eines Ventilblocks oder ähnliches.

In einer bevorzugten Variante ist vorgesehen, dass sich das elastische Element an einem Element des Ankers abstützt. Das Element des Ankers, an welchem sich das elastische Element abzustützen vermag, ist zum Beispiel der Boden einer Sachlochbohrung oder aber ein entsprechender Absatz oder Stufe, Flansch oder Ring entlang der axialen Durchdringungsöffnung in dem Anker, der zur Aufnahme des Prallstößels dient.

Neben der Variante, dass sich das elastische Element an einem im Anker fest angeorneten Element abzustützen vermag, sind anderen Variante möglich, bei welchen sich das elastische Element an einem Dichtelement abstützt und das Dichtelement am Anker auf der der Ankerstirnfläche gegenüberliegenden Rückseite in einer Kammer angeordnet ist. Das Dichtelement ist dabei aus ausreichend elastischen Material geschaffen, wie es eben für Dichtelemente eingesetzt wird, zum Beispiel Polymeren, Elastomeren, Moosgummi, Silikon oder ähnlichem. Oftmals besitzt das Dichtelement dabei eine gewisse Elastizität, um sicher auf dem Dichtsitz aufzuliegen und diesen abzudichten. Die sich an dem Dichtelement hierzu ausbildende Dichtfläche schließt bevorzugt bündig mit der die Ankerrückseite abschließenden Oberfläche ab oder steht etwas über diese hervor. So wird gewährleistet, dass zunächst das Dichtelement auf dem Dichtsitz zu liegen kommt, bevor der Anker eine entsprechende (harte) Auflage am Ventilblock findet. Natürlich ist es auch möglich, dass das Dichtelement im Anker eine gewisse Beweglichkeit besitzt. Bei dieser Variante ist sowohl das Dichtelement wie auch der Prallstößel schwimmend gelagert und stützten sich über das elastische Element, insbesondere die Stößelfeder, aufeinander ab, wodurch geschickterweise nur eine Feder für die Aufschlagdämpfung und den Toleranzausgleich des Dichtelementes notwendig ist. Somit wird ein Teil der kinetischen Energie des Ankers in Spannenergie der Stößelfeder umgesetzt beziehungsweise beim Komprimieren des Dichtelementes unter Umständen auch vernichtet. Die dabei entstehende Wärme wird problemlos an die Umgebung abgegeben.

Die schwimmende Anordnung des Dichtelementes und des Prallstößels, die sich über die Stößelfeder abstützen, führt dazu, dass nur eine Feder für den Toleranzausgleich des Dichtelmentes notwendig ist und so auch das Dichtelement immer bezüglich der Ankerrückseite an der richtigen Position angeordnet ist.

Der Elektromagnet umfasst sowohl Lösungen, bei welchen der Anker ein Dichtelement trägt, wie auch Lösungen, bei welchen der Anker auf einen Betätigungsstift wirkt. Hierzu ist der Betätigungsstift separat, unabhängig von dem Anker ausgebildet und zum Beispiel durch eine entsprechende Anstellfeder bei Bedarf auf Anlage an dem Anker bringbar.

Erfindungsgemäß ist vorgesehen, dass an dem Anker eine Ankerrückstellfeder angeordnet ist, deren Wirkrichtung der Bewegung des Ankers in Richtung des Polkernes entgegen gerichtet ist. Durch die Anordnung der Ankerrückstellfeder wird der Anker bei ausgeschaltetem elektrischen Strom wieder in seiner Ausgangsstellung zurück geschoben, das heißt, der Luftspalt zwischen der Ankerstirnfläche und dem Kern vergrößert sich wieder. Die Ankerrückstellfeder ist dabei zum Beispiel im Polkern oder im Anker in geeigneter Weise gelagert. Erfindungsgemäß ist hierzu vorgesehen, dass die Ankerrückstellfeder in dem dem Polkern zugewandten Bereich der Sacklochbohrung angeordnet ist. Die Ankerrückstellfeder kann auch in der Durchdringungsöffnung angeordnet sein. Dies ist eine platzsparende Anordnung für die Ankerrückstellfeder, die im wesentlichen im Anker eintaucht und so nicht stört.

Lösungen sind auch natürlich vorgesehen, bei welchen sich die Ankerrückstellfeder auf der Ankerstirnfläche abstützt.

Die Durchdringungsöffnung beziehungsweise die Sacklochbohrung hat dabei einen ausreichend großen Durchmesser, damit in dieser sowohl der Prallstößel wie auch die Ankerrückstellfeder Platz finden. In dem Anker ist dann eine entsprechende Verengung oder Schulter, zum Beispiel im Führungs- oder Mittelbereich vorgesehen, an welchen sich zum Einen das Ende der Ankerrückstellfeder abstützen kann und auf der anderen Seite der Prallstößel eine Führung erfährt. Hieraus resultiert eine kompakte Lösung.

In einer weiteren Ausgestaltung ist vorgesehen, dass die Kammer auf der der Rückseite abgewandten (Innen-)Seite eine Anlageschulter für das Dichtelement aufweist. Anstelle der Anlageschulter, die sich radial bezüglich der Ankerlängsachse (also rechtwinklig zur Ankerlängsachse) zu erstrecken vermag, ist auch, gemäß einer Alternative, ein Innenkonus vorgesehen, der sich in Richtung der Rückseite aufweitet. Dieser Innenkonus kann auch als Fase bezeichnet werden.

Diese beiden unterschiedlichen Varianten erlauben es, das elektromagnetische Verhalten des Ankers und somit auch des gesamten Elektromagneten einzustellen.

Insbesondere ist in einer Variante vorgesehen, dass die Stößelfeder stärker oder schwächer ausgebildet als die Ankerrückstellfeder. Natürlich können diese beiden Federn in einer Variante auch bezüglich ihrer Federkonstante oder Steifheit gleich sein.

Durch die Anpassung der Stößelfeder, insbesondere bei einer Ausgestaltung der Kammer mit Hilfe einer Anlageschulter, ist es möglich, dass der Abfallstrom den jeweiligen Erfordernissen variabel angepasst werden kann. In diesem Fall ist die Stößelfeder (deutlich) schwächer ausgebildet als die Ankerrückstellfeder. Bei der Variante mit einem Innenkonus hingegen ist es günstig, eine Stößelfeder zu verwenden, die deutlich stärker ist als die Ankerrückstellfeder. Hier wird erreicht, dass das Dichtelement im abgefallenen Zustand (also mit ausgeschalteten elektrischen Strom durch die Wicklungen des Elektromagneten) durch die Kraft der Ankerrückstellfeder nicht zurückweichen kann. Diese relativ starke Stößelfeder bewirkt aber im Gegenzug, dass auch auf dem Prallstößel eine große Kraft ausgeübt wird, die vor allem im angezogenen Zustand des Ankers zur Wirkung kommt und Einfluss auf das Dämpfungsverhalten und den Restluftspalt (Abfallstrom) nimmt.

Bei der Variante, in welchen die Kammer mit einer Anlageschulter, deren Schulterfläche radial bezüglich der Längsachse verläuft, ausgebildet ist, kann sich das Dichtelement eben an dieser Anlageschulter abstützen. Das Dichtelement kann dabei im abgefallenen Zustand, also bei ausgeschaltetem Strom, bedingt durch die Kraft der Ankerrückstellfeder nicht beliebig weit nach hinten beziehungsweise innen ausweichen. Die Stößelfeder kann demzufolge deutlich schwächer und auch schwächer als die Ankerrückstellfeder ausgeführt sein.

Somit ergibt es sich, dass durch die Auswahl der Steifigkeit der Stößelfeder und der Ankerrückstellfeder einerseits und der Gestaltung der das Dichtelement aufnehmenden Kammer das Verhalten des Ankers für einen großen Bereich einstellbar ist. Es besteht die Möglichkeit, das Dämpfungsverhalten und den Abfallstrom sehr variabel den Erfordernissen anzupassen.

In einer bevorzugten Ausgestaltung ist vorgesehen, dass der Prallstößel an seinem, der Stößelstirnfläche abgewandten Fußbereich eine Aufweitung aufweist, die von der Stößelfeder, im unbestromten Zustand gegen einen inneren Anschlag des Ankers gedrückt wird. Die Stößelfeder greift am Fußbereich, also am unteren Ende des Prallstößels an. Die axiale Durchdringungsöffnung in dem Anker besitzt eine Verengung, durch welche sich ein Anschlag in dem Anker bildet. Durch eine solche Ausgestaltung ist der Weg definiert, um welchen die Stößelstirnfläche gegenüber der Ankerstirnfläche vorsteht (oder zurücksteht). Gleichzeitig ist der Prallstößel in dem engeren Bereich, der sich an dem Anschlag im Anker, im Bereich der axialen Durchdringungsöffnung anschließt, geführt.

Der Anker ist aus magnetisierbaren Material geschaffen, um in geeigneter Weise auf das angelegte Magnetfeld zu reagieren. Üblicherweise besteht der Anker aus Metall, zum Beispiel entsprechenden Legierungen oder Stählen. Der Anker ist dabei zum Beispiel als Drehteil ausgebildet, der danach zerspanend bearbeitet worden ist, um die axiale Durchdringungsöffnung oder Sacklochbohrung oder ähnliches einzuarbeiten.

In einer Variante ist aber auch vorgesehen, dass der Anker als Abschnitt eines Rohrprofiles ausgebildet ist. Für eine sichere Lagerung des Prallstößels beziehungsweise der anderen Elemente (elastisches Element, Dichtelement oder Stößelfeder und so weiter) schließen sich dann entsprechend formgebende Bearbeitungsschritte an. Die Verwendung eines Rohrprofiles erspart natürlich den verhältnismäßig aufwendigen, zerspanenden Bearbeitungsschritt.

Der Prallstössel zum Beispiel aus Metall, Stahl, Leichtmetall, Kunststoff oder faserverstärkten Kunststoff gebildet. Die Ausbildung des Prallstößels aus Metall hat natürlich den Vorteil, dass der mechanisch verhältnismäßig stark belastete Kopfbereich des Prallstößels ausreichend stabil ist. Es sind aber auch hochfeste Kunststoffe bekannt, die sich für diesen Anwendungsfall eignen. Der Vorteil der Verwendung von Kunststoff liegt insbesondere darin, dass damit das Gesamtgewicht des Ankers reduziert wird. Auf die hieraus resultierenden Vorteile wurde bereits hingewiesen.

Die Erfindung umfasst nicht nur einen Elektromagneten wie beschrieben, die Erfindung umfasst auch ein Ventil, insbesondere ein Pneumatikventil, welches einen Elektromagneten, wie im Anspruch 1 beschrieben, aufweist, wobei der Anker auf seiner dem Polkern abgewandten Seite ein Dichtelement trägt, das mit einem Dichtsitz des Ventils zusammenwirkt. Dabei befindet sich das Dichtelement auf der der Ankerstirnfläche abgewandten Rückseite. Durch eine solche Ausgestaltung wird ein schnell schaltendes, also schnell reagierendes aber auch dauerhaft funktionierendes Ventil, insbesondere Pneumatikventil zur Verfügung gestellt.

Grundsätzlich eignet sich die Anordnung auch für Hydraulikventile.

Die Anordnung ist dabei oftmals so gewählt, dass der Ankerraum beziehungsweise das Innere des Ankers mit dem zu steuernden Medium gefüllt ist, da sich der Dichtsitz an einer Begrenzungswand des Ankerraumes anschließt.

In der Zeichnung ist die Erfindung insbesondere in einem Ausführungsbeispiel schematisch dargestellt. Es zeigen:
- Fig. 1: einen Schnitt durch einen erfindungsgemäßen Elektromagnet beziehungsweise Ventil und
- Fig. 2: einen Schnitt durch den Anker gemäß der Erfindung, wobei in dem Schnitt zwei Varianten gezeigt sind.

In den Figuren sind gleiche oder einander entsprechende Elemente jeweils mit den gleichen Bezugszeichen bezeichnet und werden daher, sofern nicht zweckmäßig, nicht erneut beschrieben.

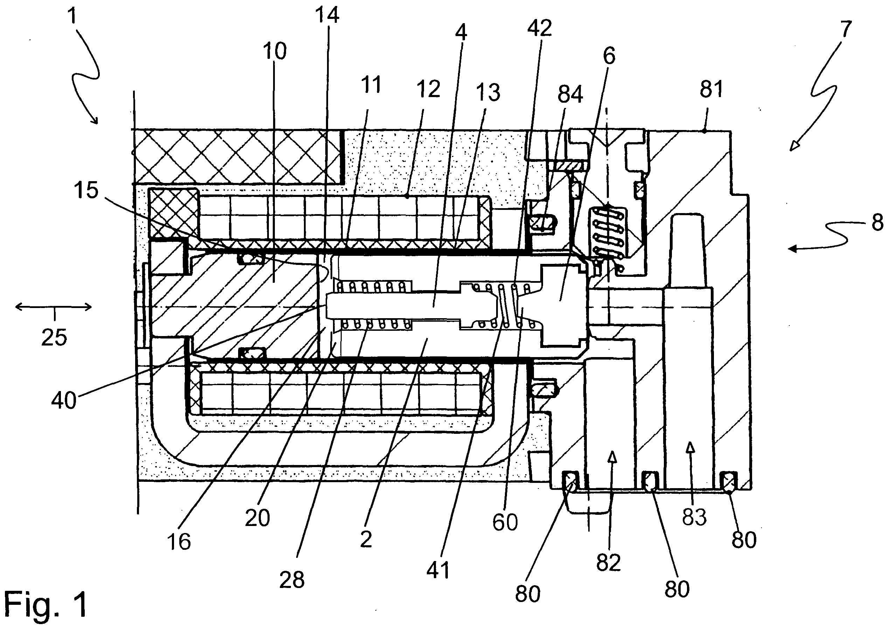

In Fig. 1 ist das erfindungsgemäße Ventil 7, bestehend aus dem erfindungsgemäßen Elektromagneten 1 und dem Ventilblock 8 gezeigt. Der grundsätzliche Aufbau des Ventiles 7 ist hinlänglich bekannt.

Der Ventilblock 8 umfasst ein Ventilgehäuse 81, in welchem eine Druckleitung 82 und eine Arbeitsleitung 83 vorgesehen sind. Diese verlaufen zunächst in einer Querbohrung (bezüglich der Hubbewegung) des Ankers 2 im wesentlichen rechtwinkelig, um dann mit einer axialen Anschlussbohrung in den Ankerraum 14 des Elektromagneten 1 zu münden.

Über die Dichtungen 80 ist das Ventilgehäuse 81 an die diversen Anschlussleitungen angeschlossen, die Dichtung 84 ist zwischen dem Ventilgehäuse 81 und dem Elektromagneten 1 vorgesehen und dichtet diesen Bereich ab.

Der Aufbau des Elektromagneten 1 gemäß der Erfindung ist ebenfalls im Stand der Technik bekannt. Der Ankerraum 14 wird in dem hier gezeigten Ausführungsbeispiel umgeben von einem Polrohr 13. Zumindest teilweise wird der Ankerraum 14 sowohl von dem Polrohr 13 wie auch von dem Spulenkörper 11 umgeben, wobei das Polrohr 13 in Richtung des Ventilblockes 8 etwas über den Spulenkörper 11 hervorsteht, der Ankerraum 14 ist noch weiter über das Ende des Polrohrs 13 in Richtung des Ventilblockes 8 ausgedehnt. Der Spulenkörper 11 trägt die Wicklungen 12 von mit elektrischen Strom beaufschlagbarem Draht. Durch den Stromfluss durch die Wicklungen 12 entsteht ein Magnetfeld, welches auf den Anker 2, welcher im Ankerraum 14 axial beweglich gelagert ist (siehe Doppelpfeil 25) wirkt.

Der Elektromagnet 1 besitzt an seinem, dem Ventilblock 8 abgewandten Bereich einen Polkern 10, auf welchen das Polrohr 13 aufgesteckt ist. Die dem Anker 2 zugewandte Polkernfläche 15 begrenzt den Luftspalt 16 zwischen der Ankerstirnfläche 20 und dem Polkern 10.

In der in Fig. 1 gezeigten Ausgestaltung des Elektromagneten 1 ist die Anschlusstechnik des Elektromagneten nicht gezeigt, sie ist für die Ausgestaltung der Erfindung nicht wesentlich.

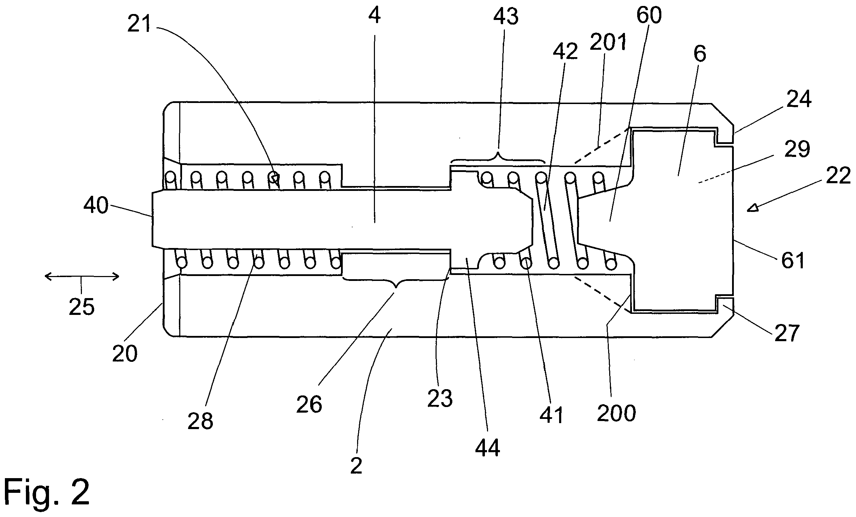

In Fig. 2 ist der Anker 2 detailliert herausgezeichnet dargestellt.

Die in Figur 2 gewählte dargestellte umfasst zwei verschiedene Ausgestaltungen des Ankers 2. Beide Varianten unterscheiden sich im Hinblick auf die nach Innen gerichteten Abschlussbeziehungsweise teilweise Begrenzungsfläche der Kammer 29, die bei einer ersten Variante mit einer radial verlaufenden (daher ringartigen) Anlageschulter 200 (mit durchgezogenem Strich gezeigt) realisiert ist und in der anderen Variante (gestrichelt) ausgeführt mit einem Innenkonus 201 realisiert ist.

Die Hubbewegung, die erfolgt, wenn der Anker 2 aufgrund des Magnetfeldes (dieses entsteht durch den durch die Wicklung der Spule fließenden Strom) bewegt wird, versetzt den Anker 2 nach links. Diese Bewegung ist durch den Doppelpfeil 25 angedeutet.

In der nach links versetzten Hubbewegung vorne ist die den Anker 2 abschließende Ankerstirnfläche 20 vorgesehen. Konzentrisch bezüglich der Längsachse des Ankers 2 ist eine Durchdringungsöffnung 21 vorgesehen, die aufgrund der unterschiedlichen Durchmesser der Durchdringungsöffnung 21 entlang der Achse des Ankers 2 als Stufenbohrung mit verschiedenen Absätzen und Hinterschneidungen ausgebildet ist. In dem vorderen Bereich der Druchdringungsöffnung ist ein Durchmesser gewählt, der ausreichend Platz lässt, dass hier auch eine Ankerrückstellfeder 28 einsetzbar ist. Sie steht über die Ankerstirnfläche 20 im unbestromten Zustand etwas vor und dient dazu, den Anker im abgefallenen (stromlosen) Zustand wieder in seine Ausgangslage zu bringen. Dabei stützt sich die Ankerrückstellfeder 28 im Inneren des Ankers 2 an einem engeren Bereich der Durchdringungsöffnung 21, zum Beispiel den Führungsbereich 26, ab, der durch einen entsprechenden Absatz oder durch eine entsprechende Stufe in der Durchdringungsöffnung 21 realisiert ist.

Natürlich bewirkt die Komprimierung der Ankerrückstellfeder 28 auch eine Energieaufnahme der kinetischen Energie des Ankers 2, die ein Abbremsen des Ankers unterstützt und die Aufprallenergie reduziert. Die Erfindung umfasst dabei Anordnungen, bei welcher bei der Anzugsbewegung des Ankers 2 (bei stromdurchflossenen Wicklungen 12) die Ankerrückstellfeder 28 vor oder nach dem Prallstößel 4 mit der Polkernfläche 15 in Kontakt tritt.

Ziemlich in der Mitte des Ankers 2 ist ein Führungsbereich 26 vorgesehen, der eine radiale Lagerung des in der Durchdringungsöffnung 21 geführten beziehungsweise vorgesehenen Prallstößels 4 bildet. In diesem Bereich weist die Durchdringungsöffnung 21 einen nur geringfügig größeren Innendurchmesser auf als der Außendurchmesser des Prallstößels 4 beträgt. Ausgehend von diesem Mittelbereich 26 nach links wie nach rechts (in axialer Richtung), weitet sich die Durchdringungsöffnung 21 jeweils auf.

Der in der Durchdringungsöffnung 21 vorgesehene Prallstößel 4 besitzt eine Stößelstirnfläche 40, die gegenüber der Ankerstirnfläche 20 vorsteht und zwar um einen kleinen Bereich, zum Beispiel wenige 1/10 mm oder Millimeter.

Prallt nun der Anker 2 bei der Hubbewegung auf die die Hubbewegung begrenzende Polkernfläche 15 des Polkernes 10, so kommt zunächst die Stößelstirnfläche 40 mit der Polkernfläche 15 in Kontakt. Dadurch wird der Prallstößel 4 relativ zum übrigen Anker 2 nach rechts versetzt und komprimiert das elastische Element 41.

Das elastische Element 41 stützt sich dabei an dem der Stößelstirnfläche 40 gegenüberliegenden Fußbereich 43 an dem Prallstößel 4 ab. Dabei ist der Fußbereich 43 für eine leichtere Montage leicht konisch ausgebildet und endet dann in einem (ringartigen) Aufweitungsbereich 44, dessen Durchmesser größer ist als der Durchmesser im Mittelbereich 26.

Bezüglich des Mittelbereiches 26 nach rechts gesehen schließt sich wieder eine Aufweitung des Innendurchmessers der Durchdringungsöffnung 21 an, wodurch ein innerer Anschlag 23 entsteht, welcher die Bewegung des Prallstößels 4 nach links (relativ zum Anker 2) begrenzt. Im unbelasteten Zustand drückt das elastische Element 41, das in dem hier gezeigten Ausführungsbeispiel als Stößelfeder 42 (Schraubenfeder oder ähnliches) ausgebildet ist, die Aufweitung 44 gegen den Innenanschlag 23.

Die Montage des Prallstößels 4 erfolgt dabei von rechts, derart, dass zunächst der Prallstößel 4 in die Durchdringungsöffnung 21 eingefädelt wird, dann das elastische Element 41 beziehungsweise die Stößelfeder 42 auf diese gesetzt wird und hernach ein Dichtelement 6 am rechten Ende des Ankers 4 eingesetzt wird. Das Dichtelement 6, zum Beispiel einen Nippel, befindet sich dabei in einer Kammer 29, die Teil der Durchdringungsöffnung 21 ist. Der Durchmesser der Kammer 29 ist dabei größer als in dem Bereich der Druchdringungsöffnung 21, in welchem die Stößelfeder 42 gelagert ist. Dies wird durch eine entsprechende Aufweitung des Innendurchmessers erreicht, die entweder stufenartig in Form der Anlageschulter 200 (mit durchgezogenen Strich gezeichnet) erfolgt, oder durch einen Innenkonus 201 (gestrichelt gezeigt) realisiert ist. Diese Ausgestaltung dieses Bereiches der Kammer und auch die Wahl der Ankerrückstellfeder 28 und der Stößelfeder 42 ist das Verhalten des Ankers 2 einstellbar. Es ist klar, dass natürlich auch entsprechende Mischformen zwischen dem Innenkonus 201 und der Anlageschulter 200 ebenfalls zur Erfindung zählen, beziehungsweise hier auch entsprechende andere Konturen, wie Rundungen, nach Innen gewölbte Flächen und so weiter, voll einsetzbar sind.

Es ist klar, dass die Kammer 29 dabei ein Teilbereich der Durchdringungsöffnung 21 ist und durch den Innenkonus 201 beziehungsweise die Anlageschulter 200 nicht verschlossen, aber begrenzt ist.

Die Länge (in Achsrichtung beziehungsweise Bewegungsrichtung 25 des Ankers 2 gesehen) der Kammer 29 ist etwas größer wie die Höhe des Dichtelementes 6, wobei hierbei der Führungskonus 60 nicht zu berücksichtigen ist. Hieraus resultiert, dass das Dichtelement 6 in der Kammer 29 sowohl ein axiales wie auch ein radiales Spiel beziehungsweise Beweglichkeit erfindungsgemäße aufweist. Rückseitig 22 ist am Anker 2, die Kammer 29 begrenzend, ein Innenflansch 27 vorgesehen, gegen den das Dichtelement 6 durch die Stößelfeder 42 gedrückt wird. Das Dichtelement 6 hat die Aufgabe, auf einen entsprechenden Ventilsitz zu wirken und so einen Medienfluss (pneumatisch oder hydraulisch) zu unterbrechen, freizugeben oder zu steuern beziehungsweise zu regeln. Die tatsächliche Funktion wird durch die relative Lage des Dichtelementes 6 zu dem Ventilsitz beziehungsweise des Ankers 2 im Ankerraum festgelegt.

Das Dichtelement 6 besteht aus ausreichend elastischen Material, wie es für Dichtnippel und ähnliches bekannt ist und besteht zum Beispiel aus Polymeren, Kunststoffen, Moosgummi, Silikon oder ähnlichem Um das Dichtelement 6 sicher in dem rechten Ende der Durchdringungsöffnung 21, auf der Rückseite 22 des Ankers 2 zu halten, ist am Ende der Durchdringungsöffnung 21 ein Innenflansch 27 vorgesehen, der zu einer gewissen Verjüngung des Durchmessers der Durchdringungsöffnung 21 führt. Die Ankerabschlussfläche 24 auf der Rückseite 22 beinhaltet in ihrem äußeren Bereich den Innenflansch 27. Das Dichtelement 6 besitzt einen Durchmesser der größer ist als der resultierende Innendurchmesser im Bereich des Innenflansches 27. Das Dichtelement 6 ist aber ausreichend elastisch, um es für Montagezwecke durch den Innenflansch 27 einzudrücken.

Auf der rechten Seite schließt sich eine nach außen gerichtete Dichtfläche 61 an das Dichtelement 6 an, diese ist gegebenenfalls gegenüber der Ankerabschlussfläche 24 vor- oder zurückgesetzt oder bündig, je nach Auslegung des Ventilsitzes.

Auf der der Dichtfläche 61 abgewandten, in Richtung des Prallstößels 4 gerichteten Bereichs des Dichtelementes 6 ist ein Führungskonus 60 vorgesehen, der in die Stößelfeder 42 eintaucht. Dadurch ist es möglich, dass sich auch die Stößelfeder 42 an dem Dichtelement 6 abstützt und so eine schwimmende Lagerung der beiden Elemente, des Prallstößels 4 und des Dichtelementes 6 im Anker 2 ergibt. Somit wirkt auch die Stößelfeder 42 doppelt, sie dient zur Aufnahme der Abbremsenergie beim Aufprallen des Prallstößels 4 bei der Hubbewegung und drückt zum anderen das Dichtelement 6 nach rechts gegen den Innenflansch 27 und die Dichtfläche 61 auf den Dichtsitz.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Elektromagnet, zumindest umfassend einen in einem Ankerraum gelagerten Anker, wobei der Ankerraum von einer Spule umgeben ist, die eine Vielzahl von mit elektrischem Strom beaufschlagbaren Wicklungen trägt und das bei Strombeaufschlagung entstehende Magnetfeld den Anker gegen einen Polkern bewegt, in dem Anker (2) ein Prallstößel (4) beweglich gelagert ist und im unbestromten Zustand der Abstand zwischen der Stößelstirnfläche (40) und dem Kern geringer ist als der Abstand zwischen der Ankerstirnfläche (20) und dem Polkern (10), **dadurch gekennzeichnet, dass** in dem Anker (2) eine axial angeordnete Sacklochbohrung vorgesehen ist und an dem Anker (2) eine Ankerrückstellfeder (28) angeordnet ist, deren Wirkrichtung der Bewegung des Ankers (2) in Richtung des Polkernes (10) entgegen gerichtet ist, wobei die Ankerrückstellfeder (28) in dem dem Polkern (10) zugewandten Bereich der Sacklochbohrung angeordnet ist.

2. Elektromagnet nach Anspruch 1, **dadurch gekennzeichnet, dass** die dem Polkern (10) zugewandte Stößelstirnfläche (40) gegenüber der Ankerstirnfläche (20) vorsteht.

3. Elektromagnet nach einem oder beiden der vorhergehenden Ansprüche, **dadurch gekennzeichnet, dass** in dem Anker (2) ein elastisches Element (41), insbesondere eine Stößelfeder (42) für den Prallstößel (4) vorgesehen ist, das komprimiert wird, wenn bei Strombeaufschlagung sich der Anker (2) gegen den Polkern (10) bewegt und die Stößelstirnfläche (40) an dem Polkern (10) anliegt.

4. Elektromagnet nach einem oder mehreren der vorhergehen den Ansprüche, **dadurch gekennzeichnet, dass** in dem Anker (2) eine axiale Durchdringungsöffnung (21) zur Aufnahme des Prallstößels (4) vorgesehen ist.

5. Elektromagnet nach einem oder mehreren der vorhergehenden Ansprüche, **dadurch gekennzeichnet, dass** sich das elastische Element (41) an einem Element des Ankers (2) abstützt und/oder sich das elastische Element (41) an einem Dichtelement (6) abstützt und das Dichtelement (6) im Anker (2) auf der der Ankerstirnfläche (20) gegenüber liegenden Rückseite (22) in einer Kammer (29) angeordnet ist.

6. Elektromagnet nach einem oder mehreren der vorhergehenden Ansprüche, **dadurch gekennzeichnet, dass** der Anker (2) auf einen Betätigungstift wirkt und/oder der Prallstößel (4) an seinem der Stößelstirnfläche (40) abgewandten Fußbereich (43) eine Aufweitung (44) aufweist, die von der Stößelfeder (42) im unbestomten Zustand gegen einen inneren Anschlag (23) des Ankers (2) gedrückt wird.

7. Elektromagnet nach einem oder mehreren der vorhergehenden Ansprüche, **dadurch gekennzeichnet, dass** die Kammer (29) auf der, der Rückseite (22) abgewandten Seite eine Anlageschulter (200) oder einen Innenkonus (201) für das Dichtelement (6) aufweist.

8. Elektromagnet nach einem oder mehreren der vorhergehenden Ansprüche, **dadurch gekennzeichnet, dass** die Stößelfeder (42) stärker oder schwächer ausgebildet ist als die Ankerrückstellfeder (28).

9. Elektromagnet nach einem oder mehreren der vorhergehenden Ansprüche, **dadurch gekennzeichnet, dass** der Anker (2) als Abschnitt eines Rohrprofiles ausgebildet ist.

10. Elektromagnet nach einem oder mehreren der vorhergehenden Ansprüche, **dadurch gekennzeichnet, dass** der Prallstößel (4) aus Metall, Stahl, Leichtmetall, Kunststoff oder faserverstärktem Kunststoff besteht.

11. Ventil, insbesondere Pneumatikventil, bestehend aus einem Elektromagneten nach einem oder mehreren der vorhergehenden Ansprüche, wobei der Anker auf seiner dem Polkern abgewandten Seite ein Dichtelement trägt, das mit einem Dichtsitz des Ventils zusammenwirkt.

12. Ventil nach Anspruch 11, **dadurch gekennzeichnet, dass** der Ankerraum (14) beziehungsweise das Innere des Ankers (2) mit dem zu steuernden Medium gefüllt ist.

## Claims

1. Solenoid, at least comprising an armature mounted in an armature space, wherein the armature space is encircled by a coil carrying a number of windings which can be loaded with current, and the magnetic field generated when loaded with current moves the armature against a pole core, in the armature (2) a rebounding tappet (4) is mounted movably, and, when not loaded with electric current, the distance between the front (40) of the tappet and the core is smaller than the distance between the front (20) of the armature and the pole core (10), **characterized in that** in the armature (2) an axially arranged blind hole is provided, an at the armature (2) a pull-back spring (28) is arranged with an active direction orientated in opposite direction of the movement of the armature (2) in the direction of the pole core (10), wherein the pull-back spring (28) is arranged in the area of the blind hole facing the pole core (10).

2. Solenoid according to claim 1, **characterized in that** the front (40) of the tappet facing the pole core (10) projects over the armature front (20).

3. Solenoid according to one or both of the preceding claims, **characterized in that** in the armature (2) an elastic element (41), in particular a tappet spring (42) is provided for the rebounding tappet (4), the elastic element being compressed when, loaded with current, the armature (2) moves against the pole core (10), and the tappet front (40) is in contact with the pole core (10).

4. Solenoid according to one or more of the preceding claims, **characterized in that** in the armature (2) an axial penetration opening (21) for holding the rebounding tappet (4) is provided.

5. Solenoid according to one or more of the preceding claims, **characterized in that** the elastic element (41) is supported on an element of the armature (2), and/or the elastic element (41) is supported on a sealing element (6), and the sealing element (6) in the armature (2) is arranged on the backside (22) opposite the armature front (20) in a chamber (29).

6. Solenoid according to one or more of the preceding claims, **characterized in that** the armature (2) acts on an actuating pin, and/or the rebounding tappet (4) has on its bottom area (43) opposite the tappet front (40) a widening (44) that is pressed against an inner stop (23) of the armature (2) by the tappet spring (42), when not loaded with current.

7. Solenoid according to one or more of the preceding claims, **characterized in that** the chamber (29) has on its side opposite the backside (22) a contact shoulder (200) or an internal cone (201) for the sealing element (6).

8. Solenoid according to one or more of the preceding claims, **characterized in that** the tappet spring (42) is designed either stronger or weaker than the armature pull-back spring (28).

9. Solenoid according to one or more of the preceding claims, **characterized in that** the armature (2) is designed as section of a pipe profile.

10. Solenoid according to one or more of the preceding claims, **characterized in that** the rebounding tappet (4) consists of metal, steel, light metal, plastic or fiber reinforced plastic.

11. Valve, in particular pneumatic valve, consisting of a solenoid according to one or more of the preceding claims, wherein the armature carries on its side opposite the pole core a sealing element interacting with a seal seat of the valve.

12. Valve according to claim 11, **characterized in that** the armature space (14) or the interior of the armature (2) is filled with the medium to be controlled.

## Revendications

1. Electroaimant comprenant au moins une armature située à l'intérieur d'un espace d'armature, ledit espace d'armature étant entouré par une bobine portant un grand nombre d'enroulements pouvant être parcourus par un courant électrique dont le champ magnétique ainsi créé déplace l'armature contre le noyau polaire de façon à ce qu'un poussoir (4) est maintenu mobile à l'intérieur de l'armature (2) créant une distance entre la surface frontale (40) du poussoir et l'armature qui est, sans courant, inférieure à la distance entre la surface frontale (20) de l'armature et le noyau polaire (10), **caractérisé en ce qu'**un perçage borgne axial est prévu dans l'armature (2) et **en ce qu'**un ressort de rappel (28) de l'armature est situé au niveau de l'armature (2) et dont la direction d'action est opposée à la direction de mouvement de l'armature (2) vers le noyau polaire (10) et **en ce que** le ressort de rappel (28) de l'armature est situé dans la zone du perçage borgne faisant face au noyau polaire (20).

2. Electroaimant selon la revendication 1, **caractérisé en ce que** la surface frontale (40) du poussoir orientée vers le noyau polaire (10) dépasse la surface frontale (20) de l'armature.

3. Electroaimant selon une ou les deux revendications précédentes, **caractérisé en ce qu'**un élément élastique (41) est prévu dans l'armature (2), en particulier un ressort de poussoir (42) pour le poussoir (4), lequel est compressé lorsque sous ajout de courant électrique l'armature (2) se déplace contre le noyau polaire (10) jusqu'à ce que la surface frontale (40) du poussoir appuie contre le noyau polaire (10).

4. Electroaimant selon une ou plusieurs des revendications précédentes, **caractérisé en ce qu'**une ouverture axiale traversante (21) destinée à réceptionner le poussoir (4) est prévue à l'intérieur de l'armature (2).

5. Electroaimant selon une ou plusieurs des revendications précédentes, **caractérisé en ce que** l'élément élastique (41) s'appuie sur un élément de l'armature (2) et/ou **en ce que** l'élément élastique (41) s'appuie sur un élément d'étanchéité (6) et **en ce que** l'élément d'étanchéité (6) est situé dans l'armature à l'intérieur d'une chambre (29) située au niveau de la face arrière (22), opposée à la surface frontale (20) de l'armature.

6. Electroaimant selon une ou plusieurs des revendications précédentes, **caractérisé en ce que** l'armature (2) agit sur une tige d'activation et/ou **en ce que** le poussoir (4) possède au niveau opposé à la surface frontale (40), donc au niveau de son pied (43), un élargissement (44) qui est poussé sans courant électrique ajouté contre une butée intérieure (23) de l'armature (2).

7. Electroaimant selon une ou plusieurs des revendications précédentes, **caractérisé en ce que** la chambre (29) possède au niveau de la face opposée à la face arrière (22) un bord de butée intérieur (200) ou un cône intérieur (201) pour l'élément d'étanchéité (6).

8. Electroaimant selon une ou plusieurs des revendications précédentes, **caractérisé en ce que** le ressort de poussoir (42) possède une force supérieure ou inférieure à celle du ressort de rappel (28) de l'armature.

9. Electroaimant selon une ou plusieurs des revendications précédentes, **caractérisé en ce que** l'armature (2) possède la forme d'une section d'un profilé tubulaire.

10. Electroaimant selon une ou plusieurs des revendications précédentes, **caractérisé en ce que** le poussoir (4) est fabriqué en métal, en acier, en métal léger, en plastique ou en plastique renforcé de fibres.

11. Vanne, en particulier vanne pneumatique, consistant en un électroaimant selon une ou plusieurs des revendications précédentes dont l'armature comporte un élément d'étanchéité au niveau de la face opposée à celle proche du noyau polaire interagissant avec le siège d'étanchéité de la vanne.

12. Vanne selon la revendication 11, **caractérisée en ce que** l'espace d'armature (14) ou l'intérieur de l'armature (2) est remplie avec le fluide à réguler.
